# EUROPEAN PATENT SPECIFICATION

(11) **EP 3 998 912 B1**
(45) Date of publication and mention of the grant of the patent: **23.08.2023**
(21) Application number: 20764443.6
(22) Date of filing: 14.07.2020
(51) Int. Cl.: A01G 9/12, A01G 9/029, A47G 21/00

(54) **DISPOSABLE KITCHEN UTENSILS AND CUTLERY**
WEGWERFKÜCHENUTENSILIEN UND -BESTECK
USTENSILES DE CUISINE ET COUVERTS JETABLES

(30) Priority: 17.07.2019 SI 201900134
(43) Date of publication of application: 25.05.2022
(73) Proprietor: Boltezar, Mark, 1241 Kamnik (SI)
(72) Inventor: Boltezar, Mark, 1241 Kamnik (SI)
(74) Representative: Sveticic, Andrej
(86) International application number: PCT/IB2020/056591
(87) International publication number: WO 2021/009668

(56) References cited:
- WO-A2-2009/156855
- JP-U- S5 282 581
- KR-A- 20180 029 314
- Yasmine Banks: "Seedlery on Behance", , 26 February 2017 (2017-02-26), pages 1-9, XP055736577, Retrieved from the Internet: URL:https://www.behance.net/gallery/493694 53/Seedlery [retrieved on 2020-10-05]

## Description

### Field of Invention

The invention relates to disposable kitchen utensils and cutlery.

### Prior art

Disposable kitchen utensils and cutlery used on picnics, at garden parties etc. are known from prior art. Such utensils are popular because they are light and cheap compared to classic metal utensils. An advantage of disposable utensils is that they are discarded after use and do not need to be washed. On the other hand, huge amounts of discarded plastics are becoming an increasing ecological problem, as some plastic materials are only degraded in nature after more than 100 or even 1000 years, and can also emit toxic chemicals into the environment. There is a tendency to use natural materials as well as biodegradable plastic materials.

U.S. Patent Application 2018/0310774 A1 discloses wood cutlery and the manufacturing process thereof. The cutlery is obtained by cooking wood, partial drying, turning, drying, sandblasting, wax impregnation, pressing, drying and cutting into a predetermined shape. The utensils according to the invention are not brittle, do not split and do not affect the taste of the food.

Utensils made of crystallized PLA resin are also known from prior art. Polylactic acid (PLA) is a biodegradable thermoplastic aliphatic polyester obtained from renewable biomass, usually fermented plant starch, e.g. of maize, cassava, sugar cane or sugar beet. A disadvantage is that the material is biodegradable only under industrial processing conditions.

Utensils according to the preamble of claim 1 are known from the document WO2009/156855A2.

### Technical problem

The technical problem is how to adapt the utensils to be given extra applicability and biodegradability after its primary use for serving or consuming food.

### Solution to the technical problem

The relative terms such as distal, proximal end, etc. are defined from the user's point of view when the utensils are in the state of primary use (the user holds them in his hand).

The technical problem is solved by disposable utensils, such as kitchen utensils and cutlery, comprising an elongated flat handle connected via a neck to a portion of a utensil for handling food, the handle having a through hole at the proximal end, and the utensil further comprising at least one plant seed arranged in the through hole, and a biodegradable, preferably composting barrier arranged on the handle so as to close the through hole on both sides and retain the plant seed in the through hole.

The composting material is defined as a biodegradable material that decomposes in the presence of moist biomass thanks to microorganisms in less than 3 months.

The advantage of disposable utensils according to the invention is that they do not need to be discarded after primary use, but are used as a sowing tool having both a decorative and a practical function, as the seeds are easily sown in the soil to a suitable depth, and the above-ground part of the utensil serves as a support for a young plant. At the same time, the natural degradation of the utensils is taken care of.

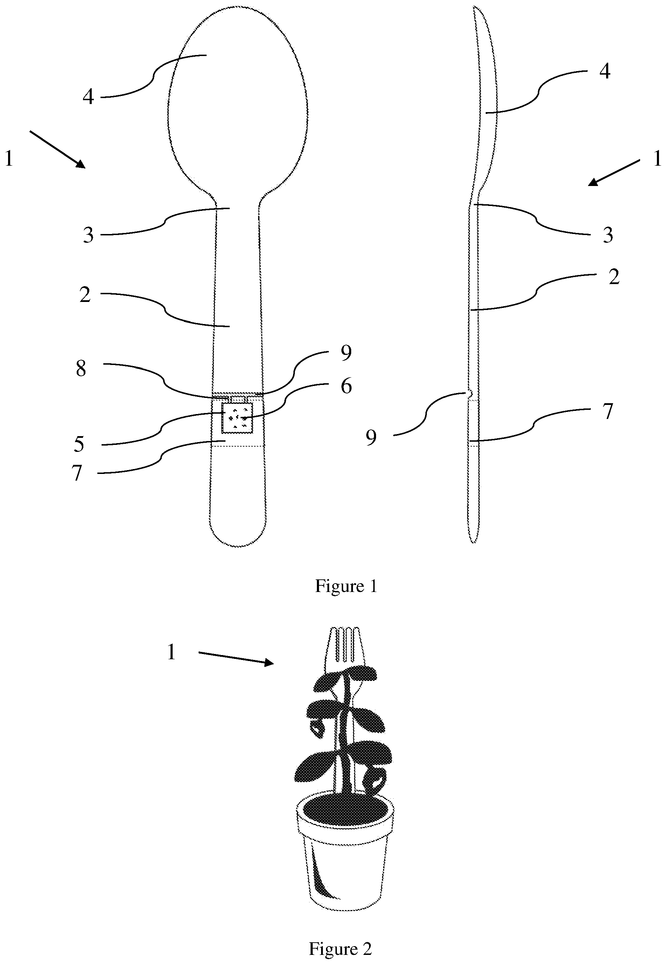

Figure 1: Utensil in front and side view
Figure 2: Utensil stuck in a flower pot as a support for a plant

The invention is described in more detail in the following.

The technical problem is solved by disposable utensils 1, such as kitchen utensils and cutlery, comprising an elongated flat handle 2 connected via a neck 3 to a portion 4 of a utensil for handling food, the handle having a through hole 5 at the proximal end, and the utensil further comprising at least one plant seed 6 arranged in the through hole, and a biodegradable, preferably composting barrier 7 arranged on the handle so as to close the through hole on both sides and retain the plant seed in the through hole.

The barrier is preferably arranged on the handle in a way to project over each edge of the through hole in the longitudinal direction of the utensil handle.

The utensil may further comprise at least one first notch 8 in the form of a channel arranged on the utensil handle, substantially in the longitudinal direction of the utensil handle so as to extend from the through hole to the area not covered by the barrier. The purpose of the notch is to facilitate penetration of moisture from the surroundings into the interior of the through hole in the planted condition of the utensil, thus accelerating germination of the seed and also the natural decomposition of the barrier. The utensil may further comprise a second notch 9 in the form of a channel, which is arranged substantially perpendicular to at least one first notch 8 and in contact with it. Its function is to facilitate the distribution of water into at least one first notch 8.

The barrier 7 can be formed as a film in the form of a patch.

The film may be formed from chitosan, which is a linear polysaccharide derived from the shells of sea crustaceans, or alginate, which is an alginic acid salt with a metal and which is refined from brown seagrass.

The biodegradable film can be formed as a transparent film. In this case, the through hole in the handle of the utensil with the plant seed inserted has a decorative function during primary use, i. e. during serving or consuming food. The film can be formed as an opaque film. The advantage of such a film is that it protects the seed from light radiation, which can adversely affect the seed.

Alternatively, the barrier may be formed in one piece as a sleeve-shaped film 7 which is attached to the flat handle 2. It is formed as a biodegradable gelatine wrapper usually used to store dietary supplements and medicines. It can be formed from a starch-based material originating from rice or potatoes, for instance, from cellulose-based material or protein-based material obtained from chicken gluten or casein.

The barrier is fixed to the utensil using an adhesive based on biodegradable and water-soluble polymers such as polyvinyl alcohol (PVOH).

The barrier can be formed as a transparent biodegradable self-adhesive cellulose film, which is a wood-based product made from regenerated wood pulp.

In a further embodiment, the film may be a heat-shrinkable film which is placed around the sleeve-shaped utensil handle during the utensil manufacturing process and then exposed to heat to shrink around the handle.

The film can be provided with perforations at least in the area of the through hole. The perforations in the film also facilitate the penetration of moisture from the surroundings into the interior of the through hole.

Alternatively, the biodegradable barrier may be formed from crepe paper.

Alternatively, the biodegradable barrier may be formed with a string helically wound around the utensil handle. The string is selected from the group consisting of: jute string, cotton string or linen string. The ends of the string are glued to the utensil handle. Alternatively, the ends of the string on the handle are fixed so that they are tucked under at least the first or at least the last wrap of the string.

There are preferably 3 to 11 plant seeds arranged in the through hole.

The shape of the through hole 5 may be selected from the group consisting of: square, rectangle, circle, ellipse, oval, triangle, and combinations thereof. The preferred through-hole shapes are elongated shapes, such as a rectangle, ellipse, and oval, arranged along the longitudinal axis in direction of the longitudinal direction of the utensil handle to minimize the mechanical strength of the handle.

The utensil is preferably made of birch wood, without any polymer coatings. Maple and bamboo wood are also suitable types of wood for making the utensils. The types of wood that contain essential oils and resins are less suitable for making the utensils, as they can contaminate food with their aromas. Examples of such types of wood are pine wood and cedar wood.

After the primary use of the utensils for serving and consuming food, the utensils are used as a sowing tool for growing plants. The proximal end of the utensil handle is pushed into the ground in the garden or in a flower pot or trough. The biodegradable barrier decomposes in moist soil and releases plant seeds into the soil, where they germinate and eventually grow into a plant. The plants begin to sprout typically within a few days to 14 days. Part of the handle and part of the food handling utensil can also serve as a support for a young plant. The underground part of the utensil decomposes over time, and the above-ground part can be subsequently composted.

Different plant seeds can be used. The limitation is only the size of the through hole. It means that the seed must be small enough to be stored in the through hole. The plant seed can be the seed of ornamental plants, e. g. seeds of zinnia, sunflower, daisy, hawthorn, herbs, e. g. basil, thyme, marjoram, parsley, lemon balm, lavender, sage, oregano, showy stonecrop, wormwood, coriander or vegetables e. g. tomatoes, cherry tomatoes, peppers, mâche, rocket, etc.

The preferred seeds are the seeds of nectar plants, which help preserve bees and other pollinators, as they represent an additional source of pollen, which they need even more with the increasing shrinkage of nectar plants in nature. Examples of nectar plants are forget-me-not, peppermint, catnip, chives, sunflower, poppy, rosemary, basil, wormwood, cumin, calendula, lavender, mint, sage, borage, coriander, thyme, dill and the like. Sowing these plants also has an educational purpose, as it encourages children and young people to take care of the environment and animals in a different, interesting and fun way.

Optionally, the utensil may also comprise a substrate disposed in the through hole together with at least one seed. The substrate ensures faster germination and growth of the plant when the utensil is planted in the ground, while protecting the seed from the harmful effects of light.

The handle may further be provided with an indication of the type of plant seed it contains. The indication can be printed, engraved or burnt on the utensil handle.

The handle may further be provided with an indication indicating the depth of insertion of the utensil handle into the ground during planting.

## Claims

1. Disposable utensils (1), such as kitchen utensils and cutlery, comprising an elongated flat handle (2) connected via a neck (3) to a portion (4) of a utensil for handling food, **characterized by** the handle having a through hole (5) at the proximal end, and the utensil further comprising at least one plant seed (6) arranged in the through hole, and a biodegradable, preferably composting barrier (7) arranged on the handle so as to close the through hole on both sides and retain the plant seed in the through hole.

2. Utensils (1) according to claim 1, **characterized in that** the barrier is arranged on the handle in a way to project over each edge of the through hole in the longitudinal direction of the utensil handle.

3. Utensils (1) according to claim 1 or 2, **characterized by** further comprising at least one first notch (8) in the form of a channel arranged on the utensil handle, substantially in the longitudinal direction of the utensil handle so as to extend from the through hole (5) to the area not covered by the barrier (7).

4. Utensils (1) according to claim 3, **characterized by** comprising a second notch (9) in the form of a channel, which is arranged substantially perpendicular to at least one first notch (8) and in contact with it.

5. Utensils (1) according to any of preceding claims, **characterized in that** the barrier (7) is formed as a film in the form of a patch, wherein the film is formed of chitosan or alginate.

6. Utensils (1) according to any of claims 1 to 4, **characterized in that** the barrier is formed in one piece as a sleeve-shaped film (7) put over the flat handle (2), the film being formed from gelatine or from a starch-based material, from cellulose-based material or protein-based material obtained from chicken gluten or casein.

7. Utensils (1) according to claim 5 or 6, **characterized in that** the film is formed as a transparent film or as an opaque film.

8. Utensils (1) according to any of claims 1 to 4, **characterized in that** the barrier is formed as a transparent biodegradable self-adhesive cellulose film, which is a wood-based product made from regenerated wood pulp.

9. Utensils (1) according to any of claims 1 to 8, **characterized in that** the film is provided with perforations in the area of the through hole.

10. Utensils (1) according to any of claims 1 to 4, **characterized in that** the barrier is formed from crepe paper.

11. Utensils (1) according to any of claims 1 to 4, **characterized in that** the barrier is formed of a string that is helically wound around the utensil handle, the string being selected from the group consisting of: jute string, cotton string or linen string.

12. Utensils (1) according to any of preceding claims, **characterized in that** the barrier (7) is fixed to the utensil handle (2) using an adhesive based on biodegradable and water-soluble polymers such as polyvinyl alcohol (PVOH).

13. Utensils (1) according to any of preceding claims, **characterized in that** the through hole (5) has an elongate shape selected from a rectangle, ellipse and oval, wherein it is arranged with its longitudinal axis in direction of the longitudinal direction of the utensil handle.

14. Utensils (1) according to any of preceding claims, **characterized by** being made of wood selected from the group consisting of birch wood, maple wood and bamboo wood.

15. Utensils (1) according to any of preceding claims, **characterized in that** the handle is further provided with an indication of the plant seed type it contains and/or an indication indicating the depth of insertion of the utensil handle into the ground during planting.

## Patentansprüche

1. Wegwerfutensilien (1), wie Kochutensilien und Besteck, umfassend einen länglichen, flachen Griff (2), der über einen Hals (3) mit einem Abschnitt (4) eines Utensils zur Handhabung von Lebensmitteln verbunden ist, **dadurch gekennzeichnet, dass** der Griff ein Durchgangsloch (5) am proximalen Ende aufweist, und das Utensil weiterhin mindestens einen Pflanzensamen (6) aufweist, der in dem Durchgangsloch angeordnet ist, und eine biologisch abbaubare, vorzugsweise kompostierbare Barriere (7), die am Griff angeordnet ist, um das Durchgangsloch beidseitig zu verschließen und den Pflanzensamen in dem Durchgangsloch zu halten.

2. Utensilien (1) nach Anspruch 1, **dadurch gekennzeichnet, dass** die Barriere derart am Griff angeordnet ist, dass sie über jede Kante des Durchgangslochs in Längsrichtung des Utensiliengriffs hinausragt.

3. Utensilien (1) nach Anspruch 1 oder 2, **dadurch gekennzeichnet, dass** sie weiterhin mindestens eine erste Kerbe (8) in Form eines Kanals umfassen, die an dem Utensiliengriff, im Wesentlichen in Längsrichtung des Utensiliengriffs angeordnet ist, sodass sie vom Durchgangsloch (5) bis zu dem Bereich reicht, der nicht von der Barriere (7) bedeckt ist.

4. Utensilien (1) nach Anspruch 3, **dadurch gekennzeichnet, dass** sie eine zweite Kerbe (9) in Form eines Kanals aufweisen, die im Wesentlichen senkrecht zu mindestens einer ersten Kerbe (8) und in Verbindung dazu angeordnet ist.

5. Utensilien (1) nach einem der vorhergehenden Ansprüche, **dadurch gekennzeichnet, dass** die Barriere (7) in Form eines Pflasters als Folie ausgebildet ist, wobei die Folie aus Chitosan oder Alginat besteht.

6. Utensilien (1) nach einem der Ansprüche 1 bis 4, **dadurch gekennzeichnet, dass** die Barriere aus einem Teil, als über den Flachgriff (2) gestülpte hülsenförmige Folie (7) ausgebildet ist, wobei die Folie aus Gelatine oder einem auf Stärke basierenden Material, einem auf Zellulose basierenden Material oder aus einem aus Hühnergluten oder Casein gewonnenen proteinbasierten Material besteht.

7. Utensilien (1) nach Anspruch 5 oder 6, **dadurch gekennzeichnet, dass** die Folie als transparente Folie oder als opake Folie ausgebildet ist.

8. Utensilien (1) nach einem der Ansprüche 1 bis 4, **dadurch gekennzeichnet, dass** die Barriere als transparente biologisch abbaubare, selbstklebende Zellulosefolie ausgebildet ist, die ein holzbasiertes Produkt aus einem nachwachsenden Zellstoff ist.

9. Utensilien (1) nach einem der Ansprüche 1 bis 8, **dadurch gekennzeichnet, dass** die Folie im Bereich des Durchgangslochs mit Perforationen versehen ist.

10. Utensilien (1) nach einem der Ansprüche 1 bis 4, **dadurch gekennzeichnet, dass** die Barriere aus Krepppapier besteht.

11. Utensilien (1) nach einem der Ansprüche 1 bis 4, **dadurch gekennzeichnet, dass** die Barriere aus einer Schnur gebildet ist, die spiralförmig um den Utensiliengriff gewickelt ist, wobei die Schnur ausgewählt ist aus der Gruppe bestehend aus: Juteschnur, Baumwollschnur oder Leinenschnur.

12. Utensilien (1) nach einem der vorhergehenden Ansprüche, **dadurch gekennzeichnet, dass** die Barriere (7) mit einem Klebstoff auf Basis von biologisch abbaubaren und wasserlöslichen Polymeren wie Polyvinylalkohol (PVOH) am Gerätegriff (2) befestigt ist.

13. Utensilien (1) nach einem der vorhergehenden Ansprüche, **dadurch gekennzeichnet, dass** das Durchgangsloch (5) eine längliche Form aufweist, die aus einem Rechteck, einer Ellipse und einem Oval ausgewählt ist, wobei es mit seiner Längsachse in Richtung der Längsrichtung des Utensiliengriffs angeordnet ist.

14. Utensilien (1) nach einem der vorhergehenden Ansprüche, **dadurch gekennzeichnet, dass** sie aus Holz bestehen, das aus der Gruppe ausgewählt ist, die aus Birkenholz, Ahornholz Bambusholz besteht.

15. Utensilien (1) nach einem der vorhergehenden Ansprüche, **dadurch gekennzeichnet, dass** der Griff ferner mit einer Anzeige des Pflanzensamentyps und/oder mit einer Anzeige der Einsetztiefe des Utensiliengriffs in den Boden während des Pflanzens versehen ist.

## Revendications

1. Ustensiles jetables (1), tels que des ustensiles de cuisine et des couverts, comprenant une poignée plate allongée (2) reliée par l'intermédiaire d'un col (3) à une partie (4) d'un ustensile pour manipuler des aliments, **caractérisée en ce que** la poignée a un trou traversant (5) à l'extrémité proximale, et l'ustensile comprend en outre au moins une graine de plante (6) disposée dans le trou traversant, et une barrière biodégradable, de préférence compostable (7) disposée sur la poignée de façon à fermer le trou traversant sur les deux côtés et à retenir la graine de plante dans le trou traversant.

2. Ustensiles (1) selon la revendication 1, **caractérisés en ce que** la barrière est disposée sur la poignée de manière à faire saillie sur chaque bord du trou traversant dans la direction longitudinale de la poignée d'ustensile.

3. Ustensiles (1) selon la revendication 1 ou 2, **caractérisés en ce qu'**ils comprennent en outre au moins une première encoche (8) sous la forme d'un canal disposé sur la poignée d'ustensile, substantiellement dans la direction longitudinale de la poignée d'ustensile de façon à s'étendre du trou traversant (5) à la zone non recouverte par la barrière (7).

4. Ustensiles (1) selon la revendication 3, **caractérisés en ce qu'**ils comprennent une seconde encoche (9) sous la forme d'un canal, qui est disposé substantiellement perpendiculairement à au moins une première encoche (8) et en contact avec celle-ci.

5. Ustensiles (1) selon l'une quelconque des revendications précédentes, **caractérisés en ce que** la barrière (7) est constituée sous la forme d'un film sous forme de patch, le film étant formé de chitosane ou d'alginate.

6. Ustensiles (1) selon l'une quelconque des revendications 1 à 4, **caractérisés en ce que** la barrière est formée d'une seule pièce sous la forme d'un film en forme de manchon (7) placé sur la poignée plate (2), le film étant composé de gélatine ou d'un matériau à base d'amidon, à partir d'un matériau à base de cellulose ou d'un matériau à base de protéine obtenu à partir de gluten de poulet ou de caséine.

7. Ustensiles (1) selon la revendication 5 ou 6, **caractérisés en ce que** le film est réalisé sous la forme d'un film transparent ou d'un film opaque.

8. Ustensiles (1) selon l'une quelconque des revendications 1 à 4, **caractérisés en ce que** la barrière est réalisée sous la forme d'un film de cellulose auto-adhésif biodégradable transparent, qui est un produit à base de bois fabriqué à partir de pâte de bois régénérée.

9. Ustensiles (1) selon l'une quelconque des revendications 1 à 8, **caractérisés en ce que** le film est pourvu de perforations dans la zone du trou traversant.

10. Ustensiles (1) selon l'une quelconque des revendications 1 à 4, **caractérisés en ce que** la barrière est formée de papier crépon.

11. Ustensiles (1) selon l'une quelconque des revendications 1 à 4, **caractérisés en ce que** la barrière est formée d'une corde enroulée en hélice autour de la poignée d'ustensile, la corde étant choisie dans le groupe constitué par : un cordon de jute, un cordon de coton ou un cordon de lin.

12. Ustensiles (1) selon l'une quelconque des revendications précédentes, **caractérisés en ce que** la barrière (7) est fixée à la poignée d'ustensile (2) à l'aide d'un adhésif à base de polymères biodégradables et hydrosolubles tels que l'alcool polyvinylique (PVOH).

13. Ustensiles (1) selon l'une quelconque des revendications précédentes, **caractérisés en ce que** le trou traversant (5) a une forme allongée choisie parmi un rectangle, une ellipse et un ovale, dans lequel il est agencé avec son axe longitudinal dans la direction de la direction longitudinale de la poignée de l'ustensile.

14. Ustensiles (1) selon l'une quelconque des revendications précédentes, **caractérisés en ce qu'**ils sont constitués de bois choisi dans le groupe constitué par le bois de bouleau, le bois d'érable et le bois de bambou.

15. Ustensiles (1) selon l'une quelconque des revendications précédentes, **caractérisés en ce que** la poignée est en outre pourvue d'une indication du type de graine de plante qu'elle contient et/ou une indication indiquant la profondeur d'insertion de la poignée d'ustensile dans le sol pendant la plantation.
